Europäisches Patentamt

European Patent Office

Office européen des brevets

(19)

(11) Publication number: **0 115 664**
**A1**

(12) **EUROPEAN PATENT APPLICATION**

(21) Application number: **83304924.0**

(22) Date of filing: **25.08.83**

(51) Int. Cl.³: **A 01 N 25/04**

(30) Priority: **07.01.83 US 456205**

(43) Date of publication of application: **15.08.84**
**Bulletin 84/33**

(84) Designated Contracting States: **BE CH DE FR GB IT LI LU NL**

(71) Applicant: **PACE NATIONAL CORPORATION, 500-7th Avenue South, Kirkland Washington 98033 (US)**

(72) Inventor: **Gurvich, Max A., 3006 Webster Point Road Northeast, Seattle Washington 98105 (US)**
Inventor: **Parent, Robert W., 702 North 83rd Street, Seattle Washington 98103 (US)**

(74) Representative: **Everitt, Christopher James Wilders et al, F.J. CLEVELAND & COMPANY 40/43 Chancery Lane, London WC2A 1JQ (GB)**

(54) **Thick suspension bait.**

(57) A semiliquid suspension bait has the texture and consistency of thin pudding so that it can be readily consumed by vermin, such as insects, rats, slugs and snails. The bait is a thick mud including a hydrophobic oleaginous base, an emulsifier, a thickener and an attractant, and is easily extruded from a plastic squeeze bottle or tube but is minimally absorbable by porous soil and resists erosion by rainwater and irrigation water. The thickener may include a combination of starch thickener and nonstarch thickener. The bait has a viscosity of between about 5,500 cp and 20,000 cp and when poured from an open mouthed container plops in gobs that string in parting, and when deposited in a mound onto a generally horizontal surface slumps sluggishly into a flattish blob.

Thick suspension bait

The present invention relates to pesticides and more particularly to a semiliquid bait for slugs, snails, insects and rodents.

In general, known baits have been prone to being washed away or diluted by rain or irrigation water or to being blown away by the wind, so that the baits have not been available in sufficient quantity for slugs or snails to ingest a lethal amount readily. Other problems with known baits are that they have not been sufficiently appealing to induce pests to ingest a lethal quantity of the poison before the pests sense that the baits are harmful, or the pests develop an aversion to the baits sufficiently quickly that the pests will discontinue eating the baits before a lethal quantity has been ingested.

For example, the British Pardou patent specification No. 498,498 of 1937 discloses a slug and snail bait consisting of cereal husks poisoned with metaldehyde which are ground to a powder and such powder is deposited in small cups around the crops to be protected. A considerable portion of such powdered material could be blown away, but even that which is not blown away is difficult for pests to eat quickly in any substantial quantity.

As another example, the bait of Boyce et al. British patent No. 1,033,692 of 1964 is molluscicidal granules, pellets, pills, flakes, tablets or blocks containing a molluscicide. The food carrier is grain or vegetable material such as wheat, corn, barley, maize, rice, bran or groundnut. This material is difficult for slugs or snails to ingest quickly in any appreciable quantity.

The invention as claimed is intended to provide a pesticide which is very effective in killing slugs, snails, insects and rodents, in the form of an insoluble powdered poison suspended in a thick semiliquid carrier having an oleaginious base, an emulsifier, a thickener and an attractant, all of the type specified. Advantages of the invention are that it is voraciously consumed by the vermin and is not readily absorbed by porous soil and resists being washed away or blown away, it can be made available readily in sufficient quantity and is of a soft but somewhat firm texture and consistency as to be quickly consumable by the pest, so that a lethal dose will be ingested before an awareness of harmfulness occurs, and it can be sold in a ready-to-use form and can be dispensed easily and quickly.

Ways of carrying out the invention are described in detail below.

The bait of the present invention is a substantially homogeneous, semiliquid suspension constituting a thick mud. The bait has a soft, smooth, buttery or creamy texture so as to be palatable to slugs and snails, but is less viscous than butter. It has about the consistency of thin pudding so that a mound of the bait deposited onto the ground or other generally horizontal surface will slump sluggishly into a flattish blob, but the bait is sufficiently viscous that it is substantially nonleveling. Such bait is largely insoluble and the blobs are minimally absorbable by porous ground although they are erodable by rainwater to a greater or lesser extent.

The bait of the present invention will not pour slowly from the open mouth of a container in a continuous stream but plops in gobs which part in strings. The bait has a viscosity between 5,500 cp (centipoise) and 20,000 cp, and preferably between 6,000 cp and 10,000 cp, so that it is thin enough to be extruded easily such as from a squeeze bottle, from the dispensing tube of a compressed air backpack or from a dispensing tube carried by a tractor-mounted boom, and can be ingested readily by pests but, as discussed above, it is thick enough so as not to be quickly dissipated by soil absorption and will maintain metaldehyde crystals in substantially uniform suspension.

The bait has as a carrier a substantially homogeneous mixture of water and finely divided particles including an oleaginous base of a hydrophobic agent, an emulsifier, a thickener and an attractant. For use as slug and snail bait the poison can be any of the following types and can be included in the proportions of the bait by weight as indicated:

metaldehyde -- 2 percent to 20 percent; preferred range 4 percent to 6 percent;

metaldehyde and calcium arsenate combination -- 2 percent to 20 percent; preferred combination 4 percent metaldehyde and 5 percent calcium arsenate;

Mesurol - a trademark of Mobay Chemical Company, Kansas City, Missouri, U.S.A., - 3,5-dimethyl-4-(methylthio) phenyl methylcarbamate -- 2 percent to 5 percent; or

metaldehyde and Mesurol combination -- 1 percent to 4 percent of each; preferred combination 2 percent metaldehyde and 2 percent Mesurol.

For a rodenticide, the poison can be selected from the following examples which can be utilized in proportions from 2 percent to 20 percent by weight, the preferred range being 4 percent to 6 percent:

zinc phosphide;

warfarin;

diphacinone; and

chlorophacinone.

For insect bait the poison can be:

Mesurol -- 0.75 percent to 4 percent; preferred range 2.5 percent to 3 percent; or

carbaryl - 1-naphthyl N-methylcarbamate -- 2 percent to 10 percent; preferred range 4 percent to 6 percent.

Each of the listed poisons is an insoluble powder which will be suspended in the carrier.

The oleaginous base is an aliphatic hydrocarbon and the preferred type is a paraffinic oil having little odor.   Such oil may be mineral oil or white mineral oil.   Alternatively, the oil may be a vegetable oil such as soybean oil, cottonseed oil or linseed oil used alone or in combination with a paraffinic oil. Also, fatty methyl esters, such as tallow methyl esters having 8 to 18 carbon atoms, used alone, or preferably in combination with a paraffinic oil, can be employed. The amount of such an oil, or a mixture of more than one of such oils, will range from 5 percent to 15 percent of the bait by weight, the preferred range being 6 percent to 12 percent.

The oleaginous base may also include a material such as lecithin, aluminum stearate, calcium stearate or some combination of these substances.   The amount of such material may range from 0% to 15% of the bait by weight.

The emulsifier, which stabilizes the suspension by keeping the oil suspended in water, may be nonionic or anionic, or may be a volatile amine soap.   The nonionic emulsifier may be ethoxylated nonyl phenol, ethoxylated octyl phenol, polyoxyethylene sorbitan esters such as polyoxyethylene sorbitan stearate, polyoxyethylene sorbitan acetate and polyoxyethylene sorbitan propionate, or polyoxyethylene glycol esters such as polyoxyethylene glycol dioleate, polyoxyethylene glycol sorbitan monooleate, polyoxyethylene glycol sorbitan trioleate, polyoxyethylene glycol stearate, polyoxyethylene glycol acetate and polyoxyethylene glycol propionate.   The preferred range for the nonionic emulsifier is 1 percent to 3 percent of the bait by weight.   The anionic emulsifier may be phosphated octyl phenol ethoxylate, phosphated nonyl phenol ethoxylate or phosphated fatty alcohol ethoxylate.   Such an anionic emulsifier should be used in combination with a nonionic emulsifier.   The quantity of such an anionic emulsifier would be preferably 1 percent to 2 percent of the bait by weight.   Volatile amine emulsifying soap is produced by the reaction of a volatile amine, such as ammonia or morpholine, with fatty acid having a chain length ranging from 15 to 22 carbon atoms. Suitable fatty acids may be either a saturated acid, such as stearic acid, or an unsaturated acid, such as oleic acid or tall oil, but it is preferred that a blend of saturated and unsaturated fatty acids be used. Such a blend may be produced by mixing saturated and unsaturated acids in a ratio of from one to three parts of unsaturated acid for each part of saturated acid, or a natural blend of saturated and unsaturated fatty acids such as found in soya oil may be used. The total proportion of fatty acid in the bait can vary from 0.5 percent to 7 percent of the bait by weight, and preferably from 1 percent to 4 percent. The amine content for reaction with the fatty acid to produce amine soap should be within the range of 0.5 percent to 2 percent by weight.

To thicken the suspension to the desired viscosity the thickener can be alginate, silica, cellulose, gum, starch, glycogen or dextrin or a combination of such thickeners. The alginate may be sodium alginate, potassium alginate, calcium alginate or propylene glycol alginate. The silica may be fused silica, talc or magnesium aluminum silicate in powder form. The cellulose may be methyl cellulose, carboxymethyl cellulose or hydroxyethyl cellulose. The gum may be xanthan gum or other polysaccharide gum. The starch may be cornstarch, potato starch, soya starch, rice starch or wheat starch. Preferably the thickener is a combination of a starch thickener and a nonstarch thickener which will form a thick suspension that will not gel but will remain a system of small dispersed particles. The nonstarch thickener will be in the range of 0.5 percent to 3 percent of the bait by weight. The starch thickener may be in the range of 2 percent to 10 percent of the bait by weight and preferably 3 percent to 6 percent.

The attractant is a food ingredient of the vegetable, grain, fruit, animal or fowl meat, or fish type or a derivative of one or more of such products. Carrots, cabbage, potatoes, celery and green beans, either raw or cooked, dill pickles, sauerkraut and molasses are examples of the vegetable or vegetable derivative type. Malt, beer mash, bran, wheat, rye, oats and corn are examples of the grain and grain derivative type. Specific examples of fruit ingredients are apple, pear, prune and apricot. Virtually any type of meat or fish is beneficial. Cooked meats such as chicken, beef or pork, and raw or cooked fish, such as salmon, sole, hake or black cod can be used. Such attractant ingredients can be in finely divided solid form as a powder, meal or flour, or a slurry such as pulp or sauce, or a liquid such as juice, or some combination of them. The amount of attractant can be from 1 percent to 20 percent of the bait by weight. A preservative for the attractant can be provided, such as potassium sorbate or sodium benzoate, in an amount from a trace to 1 percent of the bait by weight, and preferably about 0.3 percent.

Specific examples of suitable bait formulas are listed below:

Example No. 1

1. Metaldehyde 6.0 percent
2. Mineral oil 15.0 percent
3. Mixed fatty acids 4.5 percent
4. Ammonium hydroxide 2.0 percent
5. Ethoxylated nonyl phenol emulsifier 2.0 percent
6. Xanthan gum thickener 0.6 percent
7. Potato starch thickener 4.5 percent
8. Attractant 11.5 percent
9. Preservative 0.5 percent
10. Water 53.4 percent.

The mineral oil, mixed fatty acids and ethoxylated nonyl phenol are warmed and mixed to form a homogeneous liquid. The metaldehyde, potato starch thickener and attractant are then dispersed in such liquid by a rapid high shear mixing operation. Warm water containing the ammonium hydroxide is added slowly to the blended oil phase of the composition while the mixture is agitated to form the suspension. The xanthan gum thickener is dispersed in part of the water and added to the suspension to thicken the bait composition to the desired viscosity of about 7,000 cp.

Example No. 2

1. Metaldehyde 4.0 percent
2. Mineral oil 8.5 percent
3. Polyoxyethylene glycol dioleate 1.0 percent
4. Polyoxyethylene glycol sorbitan monooleate 1.0 percent
5. Xanthan gum thickener 0.7 percent
6. Attractant 16.0 percent
7. Preservative 0.3 percent
8. Water 68.5 percent.

Example No. 3

1. Metaldehyde 2.0 percent
2. Mesurol 2.0 percent
3. White mineral oil 9.0 percent
4. Polyoxyethylene glycol dioleate 1.5 percent
5. Polyoxyethylene glycol sorbitan monooleate 1.0 percent
6. Xanthan gum thickener 0.5 percent
7. Cornstarch thickener 5.0 percent
8. Attractant 15.0 percent
9. Preservative 0.5 percent
10. Water 63.5 percent.

Example No. 4

1. Metaldehyde 4.0 percent
2. Paraffinic oil 12.0 percent
3. Fatty acids of soya oil 5.0 percent
4. Ethoxylated nonyl phenol emulsifier 2.0 percent
5. Ammonium hydroxide 2.0 percent
6. Carboxymethyl cellulose thickener 0.5 percent
7. Potato starch thickener 3.5 percent
8. Attractant 10.0 percent

-8-  0115664

9. Preservative 0.3 percent

10. Water 60.7 percent.

Example No. 5

1. Metaldehyde 5.0 percent

2. White mineral oil 12.0 percent

3. Polyoxyethylene sorbitan stearate emulsifier 2.0 percent

4. Sodium alginate thickener 0.9 percent

5. Wheat starch thickener 4.0 percent

6. Attractant 18.0 percent

7. Preservative 0.25 percent

8. Water 57.85 percent.

Example No. 6

1. Carbaryl 5.0 percent

2. Mineral oil 8.0 percent

3. Polyoxyethylene glycol sorbitan monooleate 1.0 percent

4. Ethoxylated nonyl phenol 1.0 percent

5. Hydroxyethyl cellulose 1.0 percent

6. Attractant 15.0 percent

7. Preservative 0.2 percent

8. Water 68.8 percent.

Example No. 7

1. Zinc phosphide 2.0 percent

2. Mineral oil 10.0 percent

3. Ethoxylated nonyl phenol 1.0 percent

4. Polyoxyethylene glycol sorbitan trioleate 1.5 percent

5. Xanthan gum thickener 0.7 percent

6. Potato starch thickener 3.0 percent

7. Attractant 17.0 percent

8. Preservative 0.3 percent

9. Water 64.5 percent.

Various pigments or dyes may be added to the composition to provide a dull color, such as gray or brown. Such color is preferred to make the bait unattractive to children and less noticeable. For agricultural use, it is desirable to make the bait an off-white color so that the farmer can observe the bait and supply additional bait when necessary.

The compositions of Examples Nos. 2 to 7 can be prepared generally as discussed in connection with Example No. 1. The attractant, preservative and/or water-soluble or water-suspendible color or dye can be dissolved or suspended in the water or in a portion of it prior to such water being added to the blended oil phase of the composition. Oil-soluble pigment can be mixed into the oil phase prior to the addition of water. The amount of thickener may be reduced if the amount of water used to produce the mixture of desired viscosity is reduced.

The consistency of the thick mud permits the bait to be dispersed in blobs of sufficient size to contain a lethal dose of poison. Preferably the pesticide is deposited onto the ground in blobs which are spaced apart 30 to 45 cm. Due to the preferred viscosity, each blob of bait will usually remain as a coherent mass on the surface of the ground for a week or more in a form readily consumable by the pests.

Claims:

1. A bait çharacterized by a substantially homogeneous mixture of insoluble poison in powder form, oleaginous base, emulsifier, attractant, water and thickener having the consistency of thin pudding so that the poison powder will remain in substantially uniform suspension and the bait may be readily consumed by vermin and easily extruded from a plastic squeeze bottle but is not substantially absorbed into porous soil and is not readily washed away by rainwater or irrigation water.

2. The bait defined in claim 1, further characterized by the mixture having a viscosity of between about 5,500 cp and 20,000 cp.

3. The bait defined in claim 2, further characterized by the mixture having a viscosity of between about 6,000 cp and 10,000 cp.

4. The bait defined in claim 1, further characterized by the poison being selected from the group consisting of metaldehyde, zinc phosphide, warfarin, diphacinone and chlorophacinone within the range of about 2 percent to 20 percent of the bait by weight, calcium arsenate within the range of about 2 percent to 15 percent of the bait by weight, carbaryl within the range of about 2 percent to 10 percent of the bait by weight and 3,5-dimethyl-4-(methylthio) phenyl methylcarbamate within the range of about 0.75 percent to 5 percent of the bait by weight, the oleaginous base being selected from the group consisting of mineral oil, white mineral oil, vegetable oil and fatty methyl esters within the range of about 5 percent to 15 percent of the bait by weight, the emulsifier being selected from the group consisting of ethoxylated octyl phenol, ethoxylated nonyl phenol, a polyoxyethylene glycol ester, and a polyoxyethylene sorbitan ester within the range of about 1 percent to 3 percent of the bait by weight, and emulsifying soap produced by the reaction of fatty acid having a chain length ranging from 15 to 22 carbon atoms within the range of about 0.5 percent to 7 percent of the bait by weight and a volatile amine selected from the group consisting of ammonia and morpholine within the range of about 0.5 percent to 2 percent of the bait by weight, the thickener being selected from the group consisting of alginate, silica, cellulose, gum, glycogen and dextrin within the range of about 0.5 percent to 3 percent of the bait by weight, and the attractant being selected from the group consisting of vegetable, grain, fruit, meat and fish substances and derivatives of such substances within the range of about 1 percent to 20 percent of the bait by weight.

5. The bait defined in claim 4, further characterized by the thickener including starch thickener within the range of about 2 percent to 10 percent of the bait by weight.

6. A bait characterized by a substantially homogeneous mixture of poison, oleaginous base, emulsifier, attractant, water and thickener which, when poured, plops in gobs that part in strings instead of pouring in a smooth flow and a mound of which bait deposited onto a generally horizontal surface slumps sluggishly into a flattish blob, but which bait is sufficiently viscous that it is substantially nonleveling.

7. The process of making a bait characterized by mixing an oleaginous base, emulsifier, insoluble poison in powder form, attractant, water and thickener to form a substantially homogeneous mixture having the consistency of thin pudding so that the poison powder will remain in substantially uniform suspension and the bait may be readily consumed by vermon and easily extruded from a plastic squeeze bottle but is not substantially absorbed into porous soil and is not readily washed away by rainwater or irrigation water.

8. The process defined in claim 7, further characterized by adding the thickener in an amount sufficient that the viscosity of the resulting mixture is between about 5,500 cp and 20,000 cp.

9. The process defined in claim 7, further characterized by adding the thickener in an amount sufficient that the resulting mixture has a viscosity between about 6,000 cp and about 10,000 cp.

European Patent
Office

**EUROPEAN SEARCH REPORT**

0115664

Application number

EP 83 30 4924

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | WO-A-8 200 237 (SIPURO)<br>* Claims; page 6, line 15 - page 11, line 12 * | 1-9 | A 01 N 25/04 |
| X | GB-A-2 081 583 (THE MINISTER OF AGRICULTURE, FISHERIES AND FOOD)<br>* Claims * | 1-9 | |
| X | FR-A-1 498 299 (B.L. PESCHE)<br>* Page 1, right-hand column, paragraph 2 - page 2, left-hand column, paragraph 4 * | 1-9 | |
| A | DE-A-2 318 413 (AMERICAN HOME PRODUCTS)<br>* Claims; page 2, paragraph 5 - page 3, paragraph 1 * | 1,4 | |

TECHNICAL FIELDS
SEARCHED (Int. Cl. 3)

A 01 N

The present search report has been drawn up for all claims

| Place of search | Date of completion of the search | Examiner |
|---|---|---|
| THE HAGUE | 02-05-1984 | DECORTE D. |